# EUROPÄISCHE PATENTANMELDUNG

(11) **EP 2 732 997 A2**
(43) Veröffentlichungstag der Anmeldung: **21.05.2014**
(21) Anmeldenummer: 13005231.9
(22) Anmeldetag: 06.11.2013
(51) Int. Cl.: B60J 1/14, E05D 11/10, E05F 5/00

(54) **Klappfenster eines Fahrzeugs des öffentlichen Personentransports**

(30) Priorität: 15.11.2012 DE 202012011050 U
(71) Anmelder: Hübner GmbH, 34123 Kassel (DE)
(72) Erfinder: Gerald Bauerfeind, 34388 Trendelburg (DE); Andreas Rintsch, 34277 Fuldabrück (DE); Werner Rätz, 34576 Homberg (DE)
(74) Vertreter: Walther, Walther & Hinz GbR

(57) **Zusammenfassung**

Gegenstand der Erfindung ist ein Klappfenster (1) eines Fahrzeugs des öffentlichen Personentransports, wobei der Fensterflügel (2) durch ein Scharnier (5) mit der Karosserie verbunden ist, wobei der Fensterflügel (2) in mindestens zwei unterschiedlichen Stellungen rastbar fixierbar ist.

## Beschreibung

Die Erfindung betrifft das Klappfenster eines Fahrzeugs des öffentlichen Personentransports.

Klappfenster sind aus Bussen und Schienenfahrzeugen bekannt, wobei solche Klappfenster meistens als sogenannte Oberfenster Verwendung finden, die gegenüber ihrer Längserstreckung eine nur geringe Höhe aufweisen. Diese Klappfenster können üblicherweise zwei Stellungen einnehmen, nämlich eine Geschlossenstellung und eine Offenstellung. Sowohl in der Geschlossenstellung als auch in der Offenstellung muss sichergestellt sein, dass auch bei Fahrt die Fenster in dieser Stellung verbleiben.

Insofern ist aus dem Stand der Technik ein Klappfenster bekannt, wobei der Fensterflügel eine Rahmenleiste aufweist, die sich längs der einen Fensterkante erstreckt, und die in einem Fensterprofil an der Karosserie des Fahrzeuges schwenkbeweglich gelagert ist. Die Rahmenleiste stützt sich über eine in der Draufsicht krampenartig ausgebildete Feder gegenüber dem Fensterprofil ab. Das heißt, dass in der Geschlossenstellung durch die krampenartig ausgebildete Feder der Fensterflügel durch die aufgebaute Federkraft in Geschlossenstellung verharrt. Beim Klappvorgang des Fensters wird die Feder über einen Totpunkt leicht verschwenkt, sodass durch die Feder auch in der Offenstellung das Fenster sicher in dieser Position gehalten werden kann.

Die Konstruktion dieses bekannten Klappfensters ist äußerst aufwendig; dies ist zum einen bedingt durch die Rahmenleiste, die die Glasscheibe des Fensterflügels hält, und die aus Aluminium ausgebildet ist, und das Fensterprofil, das in der Karosserie eingelassen ist. Auch dieses Fensterprofil besteht im Übrigen aus Aluminium. Sehr aufwendig gestaltet sich im Übrigen auch die Konstruktion in Zusammenhang mit der in der Draufsicht krampenförmig ausgebildeten Feder, die dafür sorgt, dass die Rahmenleiste in den zwei vorgesehenen Rastpositionen verbleibt.

Die der Erfindung zugrunde liegende Aufgabe besteht demzufolge darin, die aus dem Stand der Technik bekannte Konstruktion eines Fensters wesentlich zu vereinfachen, um so eine preiswertere Herstellung zu ermöglichen.

Zur Lösung der Aufgabe wird bei einem Klappfenster eines Fahrzeugs des öffentlichen Personentransports vorgeschlagen, den Fensterflügel durch ein Scharnier mit der Karosserie unmittelbar zu verbinden, und den Fensterflügel in mindestens zwei unterschiedlichen Stellungen rastbar zu fixieren. Unter einer Karosserie wird im Folgendenden nicht nur das metallische Gehäuse des Fahrzeugs verstanden, sondern beispielsweise auch ein feststehendes Fenster, an dem das Klappfenster angeordnet sein kann.

Gegenstand der Erfindung ist nun, dass der Fensterflügel durch ein Scharnier mit der Karosserie verbunden ist. Bei dem Stand der Technik ist es so, dass der Fensterflügel eine Rahmenleiste aufweist, mit welcher der Fensterflügel durch eine Scharniereinrichtung mit dem Fensterprofil in Verbindung steht. Dadurch nun, dass das Scharnier unmittelbarer Bestandteil der Karosserie und des Fensterflügels ist, wird eine wesentliche Vereinfachung der Konstruktion herbeigeführt. Wesentlich ist darüber hinaus, dass der Fensterflügel mindestens in zwei unterschiedlichen Stellungen rastbar fixierbar ist. Eine Rastung in diesem Sinne zeigt auch der Fensterflügel gemäß dem Stand der Technik nicht. Dort ist es vielmehr so, dass die bereits zuvor beschriebene in der Draufsicht krampenförmige Feder zum Öffnen oder zum Schließen des Fensterflügels das Federelement entsprechend umschnappt und insofern den Fensterflügel in der gewünschten Position hält. Insbesondere auch die zuvor beschriebene krampenförmige Feder ist nicht nur in Bezug auf die Herstellung sehr aufwendig, sondern auch in Bezug auf die Montage. Durch die Bereitstellung einer zweistufigen Verrastung des Fensterflügels ist nunmehr eine im Prinzip preiswerte Lösung einerseits für das Verschwenken des Fensterflügels und andererseits für die Festlegung des Fensterflügels in der jeweiligen Endposition bereitgestellt.

Vorteilhaft ist das Scharnier als ein sich selbsttätig rückstellendes Scharnier ausgebildet, was zur Folge hat, dass der Fensterflügel nach Auslenkung aus seiner Ruhestellung, also der Geschlossenstellung, immer das Bestreben hat, wenn die Rastung in Offenstellung des Fensterflügels verlassen worden ist, sich selbsttätig in die Geschlossenstellung zu begeben, bzw. sich soweit schließt, dass der Eintritt von Wasser während der Fahrt minimiert ist.

Vorteilhaft ist das Scharnier nach Art eines Filmscharniers ausgebildet, wobei das Filmscharnier vorteilhaft bündig zu dem Fensterflügel und der Karosserie verläuft. Das heißt, es gibt keine vorstehenden Kanten durch die Windgeräusche entstehen könnten.

Vorteilhaft ist das Filmscharnier als Elastomerglied ausgebildet. Das heißt, dass das Elastomerglied als Scharnier und hier insbesondere nach Art eines Filmscharniers sowohl die Aufgabe des Scharniers übernimmt, als auch für die Fixierung des Fensterflügels an der Karosserie sorgt. Nach dem Stand der Technik waren hierzu mehrere Teile erforderlich.

Es wurde bereits darauf hingewiesen, dass der Fensterflügel in zwei Positionen durch eine Rasteinrichtung rastbar fixierbar ist. Die Rasteinrichtung ist hierbei vorteilhaft mit der Rasteinrichtung verbunden. Bei einer rastbaren Fixierung ist nach einem weiteren Merkmal der Erfindung vorgesehen, dass ein männliches und zwei weibliche Rastglieder in der Rasteinrichtung vorgesehen sind. Hierbei ist das männliche Rastglied als im Querschnitt runde Leiste ausgebildet, wobei das jeweilige weibliche Rastglied korrespondierend hierzu entsprechend der Form des männlichen Rastgliedes eine gewölbte Aussparung aufweist. Bei Einsitzen des männlichen Rastgliedes in dem jeweiligen weiblichen Rastglied steht das Filmscharnier unter Zugspannung. Das bedeutet, dass durch die Elastizität des Filmscharniers, das insbesondere als Elastomerglied ausgebildet ist, das männliche Rastglied sicher im entsprechenden weiblichen Rastglied gehalten wird.

Um die Rückstellung des Fensterflügels von der Offenstellung in die Geschlossenstellung noch weiterhin zu forcieren ist vorgesehen, dass auf der Innenseite der Biegung des Filmscharniers eine Kammer vorgesehen ist, die ein Elastomerglied aufweist, dass bei Verschwenken des Fensterflügels in die Offenstellung zusammengedrückt wird. Das heißt, dass unmittelbar dann, wenn der Fensterflügel die Raststellung in Offenstellung des Fensterflügels verlassen hat, wird nicht nur durch die Eigenelastizität des als Filmscharnier ausgebildeten Elastomergliedes die Rückstellung des Fensterflügels in die Geschlossenstellung in die Wege geleitet, sondern auch durch das Elastomerglied in der Kammer auf der Innenseite des als Elastomerglied ausgebildeten Filmscharniers.

Anhand der Zeichnung wird die Erfindung nachstehend beispielhaft näher erläutert.

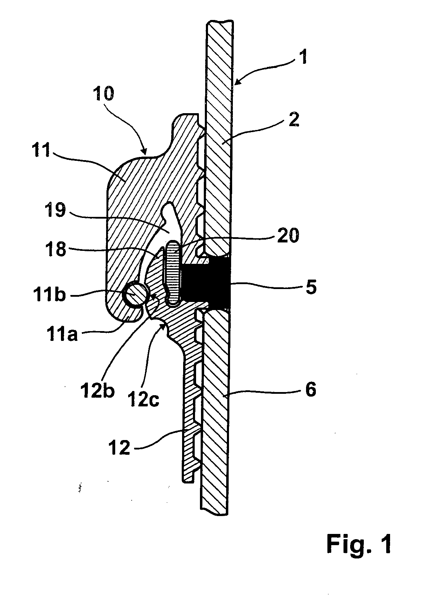

- Fig. 1: zeigt eine Schnittdarstellung eines Klappfensters, wobei das Klappfenster über ein Scharnier mit einer Glasscheibe verbunden. Die Glasscheibe kann hierbei auch die Karosserie eines Fahrzeuges sein.

Das insgesamt mit 1 bezeichnete Klappfenster weist den Fensterflügel 2 auf, der durch ein Filmscharnier 5 in Form eines Elastomergliedes mit der Glasscheibe 6 verbunden ist. Auf der Innenseite des Klappfensters bzw. der Glasscheibe 6 befindet sich die mit 10 bezeichnete Rasteinrichtung. Die Rasteinrichtung umfasst die beiden ersten und zweiten Rastelemente 11, 12, wobei das erste Rastelement 11 eine Zunge 11a aufweist, die das männliche Rastglied 11 b durch einen Presssitz aufnimmt. Die beiden Rastelemente 11, 12 sind als Metallteile, z. B. aus Aluminium, mit dem Fensterflügel und der Glasscheibe 6 durch einen Polymerkleber verbunden. Das männliche Rastglied 11 b liegt in Geschlossenstellung des Fensterflügels 2 in einem ersten weiblichen Rastglied 12b ein, dass korrespondierend zu der Form des männlichen Rastgliedes 11 b gehalten ist. Ein zweites weibliches Rastglied 12c weist das zweite Rastelement 12 darüber hinaus auf, wobei dieses Rastglied 12c der Aufnahme des männlichen Rastgliedes 11 b in geöffneter Stellung des Fensterflügels dient. Das zweite Rastelement 12 zeigt darüber hinaus einen Vorsprung 18, der zusammen mit dem ersten Rastelement 11 im Bereich des Filmscharniers eine Kammer 19 bildet. In dieser Kammer 19 liegt ein Elastomerglied 20 ein, dass folgende Funktion hat: Bei Verschwenken des Fensterflügels 2 in die geöffnete Position wird dieses Elastomerglied 20 zusammengequetscht. Die Folge hiervon ist, dass dann, wenn das männliche Rastglied 11 b aus dem zweiten weiblichen Rastglied 12c gelangt, aufgrund der Vorspannung durch dieses Elastomerglied 20 und der Eigenspannung des als Elastomerglied ausgebildeten Filmscharniers der Fensterflügel 2 das Bestreben hat, selbstständig in die Geschlossenstellung überzugehen. Zusätzlich zu dem Elastomerglied oder auch alternativ kann zur Erzeugung einer Vorspannung auch Folgendes vorgesehen sein. Das Filmscharnier 5 wird durch eine Elastomermasse in Form einer Raupe gebildet, wobei die Elastomermasse noch nicht ausgehärtet bzw. polymerisiert ist. Die Verbindung des Fensterflügels 2 und der Glasscheibe 6 an der Raupe erfolgt so, dass der Fensterflügel 2 in einem Winkel von < 180° auf der Außenseite zu der Glasscheibe 6 steht, sodass dann, wenn die Raupe zu dem Filmscharnier ausgehärtet bzw. polymerisiert ist, das Filmscharnier 5 unter einer erheblichen Vorspannung steht, wenn der Fensterflügel 2 in eingebautem Zustand in das Innere des Fahrzeugs verschwenkt wird, wie das beim Öffnen des Fensters der Fall ist.

### Bezugszeichenliste:

- 1: Klappfenster
- 2: Fensterflügel
- 5: Filmscharnier
- 6: Glasscheibe
- 10: Rasteinrichtung
- 11: erstes Rastelement
- 11a: Zunge
- 11b: männliches Rastglied
- 12: zweites Rastelement
- 12b: erstes weibliches Rastglied
- 12c: zweites weibliches Rastglied
- 18: Vorsprung
- 19: Kammer
- 20: Elastomerglied

## Patentansprüche

1. Klappfenster (1) eines Fahrzeugs des öffentlichen Personentransports, wobei der Fensterflügel (2) durch ein Scharnier (5) mit der Karosserie verbunden ist, wobei der Fensterflügel (2) in mindestens zwei unterschiedlichen Stellungen rastbar fixierbar ist.

2. Klappfenster (1) eines Fahrzeugs des öffentlichen Personentransports nach Anspruch 1,
**dadurch gekennzeichnet,**
**dass** das Scharnier (5) als sich selbsttätig rückstellendes Scharnier ausgebildet ist.

3. Klappfenster (1) eines Fahrzeugs des öffentlichen Personentransports nach einem der voranstehenden Ansprüche,
**dadurch gekennzeichnet,**
**dass** das Scharnier (5) nach Art eines Filmscharniers ausgebildet ist.

4. Klappfenster (1) eines Fahrzeugs des öffentlichen Personentransports nach einem der vorangehenden Ansprüche,
**dadurch gekennzeichnet,**
**dass** das Scharnier (5) nahezu außenhautbündig zu dem Fensterflügel (2) und zu der Karosserie verläuft.

5. Klappfenster (1) eines Fahrzeugs des öffentlichen Personentransports nach Anspruch 3 oder 4,
**dadurch gekennzeichnet,**
**dass** das Filmscharnier (5) als Elastomerglied ausgebildet ist.

6. Klappfenster (1) eines Fahrzeugs des öffentlichen Personentransports nach einem der vorangehenden Ansprüche,
**dadurch gekennzeichnet,**
**dass** zur rastbaren Fixierung des Fensterflügels (2) eine Rasteinrichtung mit einem männlichen (11 b) und zwei weiblichen Rastgliedern (12b 12c) vorgesehen ist.

7. Klappfenster (1) eines Fahrzeugs des öffentlichen Personentransports nach Anspruch 6,
**dadurch gekennzeichnet,**
**dass** das männliche Rastglied (11 b) als im Querschnitt insbesondere runde Leiste ausgebildet ist.

8. Klappfenster (1) eines Fahrzeugs des öffentlichen Personentransports nach Anspruch 6 oder 7,
**dadurch gekennzeichnet,**
**dass** das weibliche Rastglied (12b, 12c) zu der Form des männlichen Rastgliedes (11 b) korrespondierend eine gewölbte Aussparungen aufweist.

9. Klappfenster (1) eines Fahrzeugs des öffentlichen Personentransports nach einem der Ansprüche 6 bis 8,
**dadurch gekennzeichnet,**
**dass** bei Einsitzen des männlichen Rastgliedes (11 b) in dem weiblichen Rastglied (12b, 12c) das Filmscharnier (5) unter Zugspannung steht.

10. Klappfenster (1) eines Fahrzeugs des öffentlichen Personentransports nach einem der Anspruch 6,
**dadurch gekennzeichnet,**
**dass** die Rasteinrichtung eine Kammer aufweist, wobei bei Überführung des Fensterflügels in die gekippte Stellung das Volumen der Kammer vermindert wird, wobei in der Kammer ein Elastomerkörper einsitzt.
